# EUROPÄISCHE PATENTANMELDUNG

(11) **EP 0 607 518 A1**
(43) Veröffentlichungstag der Anmeldung: **27.07.1994**
(21) Anmeldenummer: 93118435.2
(22) Anmeldetag: 12.11.1993
(51) Int. Cl.: B64D 11/00, B60R 15/02, B61D 35/00

(54) **Vorrichtung zur Verhinderung des Einfrierens von Wasser in einem Wassersystem eines Fahrzeuges**

(30) Priorität: 20.01.1993 DE 4301389
(71) Anmelder: ESW-EXTEL SYSTEMS WEDEL Gesellschaft für Ausrüstung mbH, D-22876 Wedel (DE)
(72) Erfinder: Straube, Axel, Dipl.-Ing., D-25436 Uetersen (DE); Loos, Hans-August, Ing.-grad., D-25488 Holm (DE)

(57) **Zusammenfassung**

Vorrichtung zur Verhinderung des Einfrierens von Wasser in einem Wassersystem eines Fahrzeuges, vorzugsweise eines auf dem Rollfeld abgestellten Luftfahrzeuges, wobei das Wassersystem aus einem Wassertank, Zufluß- und Abflußrohren, Ventilen und einem Auffangbehälter besteht. Ein automatischer und autarker Betrieb ohne personenbezogene Aufsicht wird dadurch ermöglicht, daß an den Wassertank ein zusätzlicher Zirkulierkreislauf angeschlossen ist, in dessen Rohrleitung (1) eine Umwälzpumpe (2) zum Durchpumpen des Wassers durch den Zirkulierkreislauf angeordnet ist. Die Rohrleitung (1) ist durch einen Wärmetauscher (3) geführt, dem zur Erwärmung des durch die Rohrleitung (1) fließenden Wassers Warmluft von einer Verbrennungsheizung (4) zugeführt wird. Die Verbrennungsheizung (4) wird von einer Überwachungs- und Steuereinrichtung (6) gesteuert, der die Meßwerte eines die Wassertemperatur stetig messenden Temperatursensor (5) zugeführt werden.

## Beschreibung

Die Erfindung betrifft eine Vorrichtung gemäß dem Oberbegriff von Anspruch 1.

Wassersysteme in Fahrzeugen wie z. B. in Eisenbahnen oder Luftfahrzeugen bestehen im wesentlichen aus einem Wassertank, Zufluß- und Abflußrohren, Ventilen und Auffangbehältern. Während des Flugbetriebes von Luftfahrzeugen in größeren Flughöhen wird ein Einfrieren des Wassers in den Systemen aufgrund der verhältnismäßig großen negativen Außentemperaturen von beispielsweise -50°C mittels elektrischer Heizungssysteme vermieden, deren elektrothermische Heizmatten die wasserführenden Bauelemente der Wassersysteme umgeben und die von den Bordnetzgeneratoren der Luftfahrzeuge mit verhältnismäßig hoher elektrischer Energie versorgt werden. Diese elektrischen Heizsysteme könnten auch zur Verhinderung des Einfrierens von Wasser in Wassersystemen von auf einem Rollfeld abgestellten Flugzeugen während der Nacht bei beispielsweise Frosttemperaturen von -20°C verwendet werden, wobei die erforderliche elektrische Energie von an Bord der Luftfahrzeuge befindlichen von Hilfstriebwerken betriebenen Stromaggregaten bereitgestellt werden könnte. Nachteiligerweise bedarf ein Betrieb von bordeigenen Stromversorgungssystemen einer personenbezogenen Aufsicht, was insbesondere während der Nacht zu unerwünscht hohen Betriebskosten führt. Um dieses zu vermeiden, werden vorzugsweise bei Frostvorhersagen die Wassersysteme von auf Rollfeldern abgestellten Luftfahrzeugen vollständig entleert, wobei alle Zufluß- und Abflußrohre der Systeme entlüftet werden müssen. Vor dem nächsten Start der Luftfahrzeuge werden deren Wassertanks wieder mit Wasser aufgefüllt. Auch diese Vorgehensweise ist kostenintensiv sowie sehr umständlich und aufwendig.

Der Erfindung liegt daher die Aufgabe zugrunde, eine Vorrichtung zur Verhinderung des Einfrierens von Wasser in einem Wassersystem eines Fahrzeuges zu schaffen, die einen automatischen und autarken Betrieb ohne personenbezogene Aufsicht und ohne Verwendung von Hilfstriebwerken betriebenen Generatoren ermöglicht und somit die Betriebskosten deutlich senkt.

Die Aufgabe wird erfindungsgemäß dadurch gelöst, daß an den Wassertank ein zusätzlicher Zirkulierkreislauf angeschlossen ist, in dessen Rohrleitung eine Umwälzpumpe zum Durchpumpen des Wassers durch den Zirkulierkreislauf angeordnet ist, daß die Rohrleitung durch einen Wärmetauscher geführt ist, dem zur Erwärmung des durch die Rohrleitung fließenden Wassers Warmluft von einer Verbrennungsheizung zugeführt wird, daß ein die Wassertemperatur stetig messender Temperatursensor vorgesehen ist, dessen Temperaturmeßwerte einer die Verbrennunsheizung steuernden Überwachungs- und Steuereinrichtung zugeführt werden, und daß eine Batterie den elektrischen Versorgungsstrom für die Verbrennungsheizung, die Pumpe, den Temperatursensor und die Überwachungs- und Steuereinrichtung liefert.

Ein besonderer Vorteil der Erfindung liegt darin, daß die Verhinderung des Einfrierens von Wasser mit technisch einfachen Hilfsmitteln erreicht wird, ohne daß eine personenbezogene Aufsicht dieser Hilfsmittel erforderlich ist. Außerdem ist ein umständliches und aufwendiges Entfernen des Wassers aus dem Wassersystem sowie ein Auffüllen des Wassersystems vorteilhafterweise nicht mehr erforderlich.

Vorteilhafte Ausgestaltungen der erfindungsgemäßen Vorrichtung sind in den Unteransprüchen 2 bis 4 beschrieben.

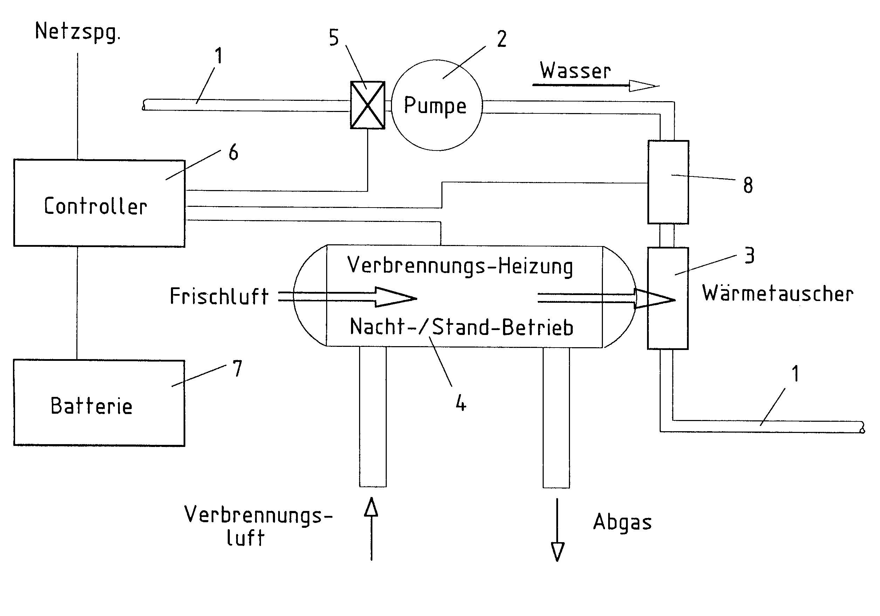

In der Zeichnung ist ein Ausführungsbeispiel nach der Erfindung dargestellt, und zwar zeigt die einzige Figur die wesentlichen Bauelemente einer erfindungsgemäßen Vorrichtung in Form eines Blockschaltbildes.

Ein an einen zeichnerisch nicht dargestellten Wassertank eines Fahrzeuges angeschlossener zusätzlicher Zirkulierkreislauf weist eine teilweise dargestellte Rohrleitung 1 auf, in der eine Umwälzpumpe 2 zum stetigen Durchpumpen des im Wassertank befindlichen Wassers durch den Zirkulierkreislauf angeordnet ist. Die Rohrleitung 1 ist durch einen Wärmetauscher 3 geführt, dem zur Erwärmung des durch die Rohrleitung 1 fließenden Wassers Warmluft von einer Verbrennungsheizung 4 zugeführt wird. Bei der Verbrennungsheizung 4 kann es sich um eine sogenannte Standheizung handeln, der Treibstoff und Verbrennungsluft zur Erwärmung von an den Wärmetauscher 3 abgegebener Frischluft zugeführt wird.

Die Verbrennungsheizung 4 und damit der Wärmetauscher 3 werden im Zyklusbetrieb betrieben. Dieses bedeutet, daß bei einem Absinken der Wassertemperatur auf oder unter einen vorgegebenen ersten niedrigen Temperaturwert ϑ 1, der oberhalb des Gefrierpunktes liegt, die Verbrennungsheizung 4 eingeschaltet wird, und daß nach der Erwärmung des den Zirkulierkreislauf durchfließenden Wassers auf oder oberhalb eines vorgegebenen zweiten höheren Temperaturwertes ϑ 2 die Verbrennungsheizung 4 abgeschaltet wird. Diese Vorgänge werden ständig wiederholt. Hierzu werden die Temperaturen des Wassers mittels eines Temperatursensors 5 stetig gemessen und einer Überwachungs- und Steuereinrichtung 6 zugeführt, die die Verbrennungsheizung 4 steuert, d. h. gemäß dem obenbeschriebenen Zyklusbetrieb ein- oder ausschaltet. Der elektrische Versorgungsstrom für die Pumpe 2 und die Überwachungs- und Steuereinrichtung 4 wird von einer Batterie 7 geliefert, die während des Betriebes des Fahrzeuges von dessen Bordnetzgenerator aufgeladen werden kann. Sofern in der Nähe der Parkposition Fahrzeuges ein Netzanschluß vorhanden ist, kann die elektrische Energieversorgung der obengenannten Bauelemente auch durch diese Spannungsquelle erfolgen.

Die Rohrleitung 1 weist bei einem Luftfahrzeug weiterhin eine zusätzliche elektrothermische Heizeinrichtung 8 auf, die während des Flugbetriebes eingeschaltet und mit elektrischer Energie aus dem Bordnetzgenerator des Luftfahrzeuges versorgt werden kann, damit auch in großer Flughöhe bei Umgebungstemperaturen von z. B. -50°C ein frostsicherer Betrieb möglich ist.

## Patentansprüche

1. Vorrichtung zur Verhinderung des Einfrierens von Wasser in einem Wassersystem eines Fahrzeuges, vorzugsweise eines auf einem Rollfeld abgestellten Luftfahrzeuges, wobei das Wassersystem aus einem Wassertank, Zufluß- und Abflußrohren, Ventilen und einem Auffangbehälter besteht, dadurch gekennzeichnet, daß an den Wassertank ein zusätzlicher Zirkulierkreislauf angeschlossen ist, in dessen Rohrleitung (1) eine Umwälzpumpe (2) zum Durchpumpen des Wassers durch den Zirkulierkreislauf angeordnet ist, daß die Rohrleitung (1) durch einen Wärmetauscher (3) geführt ist, dem zur Erwärmung des durch die Rohrleitung (1) fließenden Wassers Warmluft von einer Verbrennungsheizung (4) zugeführt wird, daß ein die Wassertemperatur stetig messender Temperatursensor (5) vorgesehen ist, dessen Temperaturmeßwerte einer die Verbrennungsheizung (4) steuernden Überwachungs- und Steuereinrichtung (6) zugeführt werden, und daß eine Batterie (7) den elektrischen Versorgungsstrom für die Verbrennungsheizung (4), die Pumpe (2), den Temperatursensor (5) und die Überwachungs- und Steuereinrichtung (6) liefert.

2. Vorrichtung nach Anspruch 1, dadurch gekennzeichnet, daß die Verbrennungsheizung (4) und damit der Wärmetauscher (3) im Zyklusbetrieb derart betrieben werden, daß die Überwachungs- und Steuereinrichtung (6) die Verbrennungsheizung (4) bei einem Absinken der Wassertemperatur auf oder unter einen vorgegebenen ersten niedrigen Temperaturwert ( ϑ 1) automatisch einschaltet und damit die Erwärmung des Wassers durch den Wärmetauscher (3) einleitet sowie beim Erreichen oder Überschreiten der Wassertemperatur auf oder über einen vorgegebenen zweiten höheren Temperaturwert ( ϑ 2) ausschaltet oder auf einen vorgegebenen niedrigen ( ϑ 1) Temperaturwert regelt, so daß dieser nicht unterschritten wird.

3. Vorrichtung nach Anspruch 1 bei Verwendung in einem Luftfahrzeug, dadurch gekennzeichnet, daß die Rohrleitung (1) eine zusätzliche elektrothermische Heizeinrichtung (8) aufweist, die für den Flugbetrieb ihre elektrische Energie aus dem Bordnetzgenerator des Luftfahrzeuges bezieht.

4. Vorrichtung nach Anspruch 1 oder 3, dadurch gekennzeichnet, daß die Batterie (7) von dem Bordnetzgenerator des Luftfahrzeuges über die Überwachungs- und Steuereinrichtung (6) während des Flugbetriebes aufgeladen bzw. im aufgeladenen Zustand erhalten wird.
